Europäisches Patentamt

(19) European Patent Office

Office européen des brevets

(11) Publication number: **0 105 239**
**A1**

(12) **EUROPEAN PATENT APPLICATION**

(21) Application number: **83109078.2**

(22) Date of filing: **14.09.83**

(51) Int. Cl.³: **C 08 J 3/20, C 08 L 9/06**

(30) Priority: **16.09.82 US 419114**

(43) Date of publication of application: **11.04.84**
**Bulletin 84/15**

(84) Designated Contracting States: **DE FR GB IT LU**

(71) Applicant: **THE FIRESTONE TIRE & RUBBER COMPANY, 1200 Firestone Parkway, Akron, Ohio 44317 (US)**

(72) Inventor: **Brantley, Herbert L., 491 Sunset View Drive, Akron Ohio 44320 (US)**

(74) Representative: **Kraus, Walter, Dr. et al, Patentanwälte Dres. Kraus & Weisert Irmgardstrasse 15, D-8000 München 71 (DE)**

(54) **Method for reducing hysteresis in synthetic rubber stocks and rubber articles made therefrom.**

(57) A method for reducing hysteresis in synthetic rubber stocks containing carbon black includes the step of mechanically compounding carbon black with a rubber selected from the group consisting of emulsion and solution styrene butadiene rubber and blends of each with and without 1,4-polybutadiene rubber to form a masterbatch containing less than 100 parts of rubber, adding additional parts of the rubber to the masterbatch so the total parts of rubber equals 100 and the amount of carbon black is reduced to an amount less than the level present in the masterbatch and, mechanically compounding the additional rubber with the masterbatch to form a rubber compound. An improved tire having a tread stock possessing improved rolling resistance and skid resistance is also disclosed wherein the tread stock is prepared by the steps of mechanically compounding carbon black with a rubber selected from the group consisting of emulsion and solution styrene butadiene rubber and blends of each with and without 1,4-polybutadiene rubber to form a masterbatch containing less than 100 parts of rubber, adding additional parts of the rubber to the masterbatch so the total parts of rubber equals 100 and the amount of carbon black is reduced to an amount less than the level present in the masterbatch and, mechanically compounding the additional rubber with the masterbatch to form a rubber compound from which the tread stock is prepared.

## METHOD FOR REDUCING HYSTERESIS IN SYNTHETIC RUBBER STOCKS AND RUBBER ARTICLES MADE THEREFROM

### TECHNICAL FIELD

The present invention provides a method for reducing hysteresis in cured synthetic rubber stocks containing carbon black. One such application for a rubber compound having reduced hysteresis is in the manufacture of tread stocks.

As a tire rotates against a road surface, a certain amount of the energy required to rotate the wheel is lost in the form of heat build up due to the constant deformation of the tread engaging the road. By reducing hysteresis it is possible to lower or improve the rolling resistance of a tire having such a rubber stock as its tread stock. Rolling resistance must be carefully balanced against skid resistance inasmuch as a tire having a minimum of rolling resistance deforms very little and consequently provides poor traction for starting, braking and steering, particularly on wet pavement. On the other hand, increasing the traction or skid resistance to a point where rolling resistance suffers would be undesirable. Unexpectedly, the present invention provides a means of reducing hysteresis to impart lower rolling resistance without sacrificing skid resistance. Improved rolling resistance for a tire tread stock is an important factor in obtaining better mileage for motor driven vehicles.

### BACKGROUND ART

It is commonly accepted that radial tires provide better rolling resistance as well as improved road traction. These improvements are primarily attributed to the tire components employed in radial tires.

A processing technique for preparing tire tread rubber compositions having improved rolling resistance and wet skid resistance is set forth in U.S. Pat. No. 4,321,168. This patent discloses a composition comprising blends of natural rubber and/or cis-1,4-polyisoprene with 25 to 75 percent by weight of amorphous polybutadiene having a 1,2-bond unit content of 65 to 90 mole percent. The process includes a two step mixing procedure whereby 40 to 70 parts of carbon black are mixed with 40 to 60 parts of the rubber compound followed by a second addition of rubber with 0 to 30 parts of carbon black in relative amounts to provide 40 to 70 parts of carbon black per 100 parts of rubber.

Another process is set forth in U.S. Pat. No. 4,342,670 which discloses the preparation of tire tread rubber compositions which comprise halogenated butyl rubbers, natural rubber, polyisoprene rubber and polybutadiene rubber. The process discloses two steps including the initial mixing of 40 to 70 parts of the rubber with at least 90 percent by weight of the total amount of carbon black followed by the addition of the remainder of the rubber and carbon black in the second mixing step.

Thus, while others have demonstrated processes involving two stages of mixing with varying amounts of rubber and carbon black, the art of which I am aware has not disclosed a process for reducing the hysteresis in synthetic rubber compositions comprising styrene butadiene rubber alone and with 1,4-polybutadiene. Compositions of the present invention exhibit reduced hysteresis, providing improved rolling resistance without reducing skid resistance when employed in the tread stocks of tires.

## DISCLOSURE OF INVENTION

The method for reducing hysteresis in synthetic rubber stocks containing carbon black according to the present invention includes the step of mechanically compounding carbon black with a rubber selected from the group consisting of emulsion and solution styrene butadiene rubber and blends of each with and without 1,4-polybutadiene rubber to form a masterbatch containing less than 100 parts of rubber, adding additional parts of rubber to the masterbatch so the total parts of rubber equals 100 and the amount of carbon black is reduced to an amount less than the level present in the masterbatch and, mechanically compounding the additional rubber with the masterbatch to form a rubber compound.

While the foregoing method of the present invention provides for reducing hysteresis in synthetic rubber stocks, in a more specific instance, the steps of that method can be separately applied in another method which involves preparing tread stocks having improved rolling resistance and skid resistance.

An improved tire having a tread stock possessing improved rolling resistance and skid resistance is also provided. The improvement is in the tread stock which is prepared by the steps of mechanically compounding carbon black with a rubber selected from the group consisting of emulsion and solution styrene butadiene rubber and blends of each with and without 1,4 polybutadiene rubber to form a masterbatch containing less than 100 parts of rubber, adding additional parts of rubber to the masterbatch so the total parts of rubber equals 100 and the amount of carbon black is reduced to an amount less than the level present in the masterbatch and, mechanically compounding the additional rubber with the masterbatch to form a rubber compound from which the tread stock is prepared.

## PREFERRED MODE FOR CARRYING OUT THE INVENTION

To illustrate the invention, a typical synthetic rubber stock is presented hereinbelow which is suitable for preparation of rubber articles such as tire treads. Hysteresis and related physical properties for this cured stock compounded according to the method of the present invention have been measured and are also presented hereinbelow. It is to be understood that the specific composition of the rubber tread stock provided as well as the component amounts have been presented solely to enable those skilled in the art to have at least one rubber stock with which to practice the invention. The invention is not otherwise limited to the specific tread stock composition disclosed hereinbelow.

Regarding the rubber component, synthetic rubber such as styrene butadiene (SBR) is preferred. The SBR can be either solution or emulsion prepared and blends of the two can be employed. Additionally 1,4-polybutadiene can be present as a blend with the SBR in amounts of from about greater than 0 to about 50 percent by weight. The rubber can be non-extended or it may be extended with oil as is well known to those skilled in the art. Such oils are generally of an aromatic species and are employed to aid processing. The amount added can range from as low as about 20 to about 50 phr depending on the rubber type as well as the intended use of the rubber, i.e., the physical properties that are required.

With respect to the carbon black, substantially any type typically employed in rubber stocks can be employed and practice of the present invention is not limited to selection of a particular black such as high abrasion furnace (HAF) disclosed hereinbelow.

The method includes two steps of mixing; in the first step less than the total 100 parts of rubber, non-extended or oil extended, is combined with all of the carbon black to form a masterbatch. The ratio of carbon black to rubber in conventional oil extended rubber stocks generally ranges from about 60 to 70 parts black to 100 parts of rubber (phr). For the method of the present invention, the ratio of carbon black to rubber in the masterbatch can range from about 75 to about 115 phr or higher depending upon the amount of oil present. The relative amounts are easily determined by first selecting the amount of carbon black desired in the resulting rubber stock and then decreasing the amount of rubber in the first step until the black to rubber ratio is about 75 to 115:100. Although the ratio disclosed provides an operable range, the results are generally improved as the level of black is increased to the upper limit in the masterbatch.

It is to be understood that when using a non oil extended rubber, the total amount of carbon black may be lower, however, the method of the present invention is still applicable so long as a masterbatch is prepared comprising less than all of the rubber and then additional rubber is added to reduce the level of carbon black per 100 parts of rubber in the final rubber stock.

When the second amount of rubber has been added, bringing the total to 100 parts, the amount of carbon black contained therein is at least about 45 phr. Where oil extended rubber is employed, for instance 100 parts of rubber with 37.5 of oil for a total weight of 137.5 parts, the amount of carbon black in the final compound is at least 60 phr.

Mixing during the first step is conducted for a period of time of from about 1.5 to 3 minutes in a conventional apparatus such as a B Banbury operating at a rotor speed of 116 rpm. When the mixing time has been completed, the remaining quantity of rubber is added to the masterbatch for a second mixing step which lasts for about 1 to 1.5 minutes. Of course, a different Banbury or the selection of different rotor speeds will effect a change in mixing times. In addition to carbon black, other ingredients are routinely added to rubber stocks. These can be added entirely during the first step or one or more can be reserved for the second step. The present invention does not require a two-step addition of any component other than the rubber as has been described.

It is believed that the two step mixing of rubber polymer and carbon black provides a much greater dispersion of the black than occurs in a conventional one step mixing system. This opinion is consistent with the test data reported hereinbelow. A useful feature of the invention is that despite the greater dispersion of black obtained, no additional energy input is required during mixing. Thus, by employing the two step mixing a finer dispersion of carbon black is obtained with less energy than if the same degree of dispersion were to be obtained in a conventional one step mix.

In the tests which follow, a typical rubber stock was prepared comprising the following ingredients, with all parts given on the basis of parts per hundred parts of rubber (phr) by weight, unless otherwise specified. The stocks were each cured at 149° C. for 45 minutes.

Compounding Ingredients

| | |
|---|---|
| Styrene butadiene rubber[a] | 100 |
| HAF carbon black | 65 |
| Zinc Oxide | 3.0 |
| Stearic Acid | 2.0 |
| Santoflex 13[b] | 2.0 |
| Wax | 3.0 |
| Process Oil | 37.5 |
| Sulfur | 2.0 |
| Santocure NS[c] | 1.0 |

a) Solution
b) N-(1,3-dimethylbutyl)-N'-phenyl-paraphenylene diamine
c) N-tert-butyl-2-benzothiazolesulfenamide

Five stocks of the foregoing composition were prepared according to the method of the present invention employing varying amounts of carbon black in the masterbatch. A separate control stock having the same composition, but resulting from a single step mix, was also prepared. The amounts of components added appears in Table I.

## TABLE I

### Preparation of Synthetic Rubber Stocks

| Example No. | 1 | 2 | 3 | 4 | 5 | 6 |
|---|---|---|---|---|---|---|
| Components (phr) | | | | | | |
| SBR[a] | 137.50 | 118.18 | 100.00 | 86.67 | 76.47 | 68.42 |
| HAF black | 65.00 | 65.00 | 65.00 | 65.00 | 65.00 | 65.00 |
| Zinc oxide | 3.00 | 3.00 | 3.00 | 3.00 | 3.00 | 3.00 |
| Stearic acid | 2.00 | 2.00 | 2.00 | 2.00 | 2.00 | 2.00 |
| Santoflex 13 | 2.00 | 2.00 | 2.00 | 2.00 | 2.00 | 2.00 |
| Wax | 3.00 | 3.00 | 3.00 | 3.00 | 3.00 | 3.00 |
| Sulfur | 2.00 | 2.00 | 2.00 | 2.00 | 2.00 | 2.00 |
| Santocure NS | 1.00 | 1.00 | 1.00 | 1.00 | 1.00 | 1.00 |
| Black in masterbatch phor[b] | 47.3[c] | 55 | 65 | 75 | 85 | 95 |
| SBR added to masterbatch | 0 | 19.32 | 37.50 | 50.83 | 61.03 | 69.08 |

a) Rubber composition = 100 parts of solution SBR + 37.5 parts of aromatic processing oil or 137.5 parts total

b) Parts per hundred of oil extended rubber

c) Total parts of carbon black in oil extended rubber compound

As can be seen from Examples 1-6, the parts of carbon black present, in the final compositions, was in all instances equal to 65.0 phr (or 47.3 parts per 100 parts of oil extended rubber). The amounts of black present in the masterbatch for Examples 2-5 ranged from 55 to 95 parts per 100 parts of oil extended rubber which is the equivalent of 75 to 130 phr.

Examples 1-6 were next subjected to physical testing the results of which are present in Table II. Tests conducted included: dynamic mechanical testing in bulk compression; Mooney viscosity; electrical resistivity; flexometer; durometer; ring tear; and rebound. Example No. 6 was not subjected to testing because the amount of carbon black added to the initial masterbatch, that is, in relation to the amount of rubber present, was too high for the stock to be processable.

TABLE II

Physical Properties of Examples 1-5

| Example No. | 1 | 2 | 3 | 4 | 5 |
|---|---|---|---|---|---|
| $\text{Tan}_\delta$ [a] | 0.176 | 0.165 | 0.145 | 0.133 | 0.134 |
| ML/4/100° C. | 60 | 60.5 | 58.8 | 59.5 | 58.1 |
| Resistivity (ohm-cm) | 2238 | 4188 | 10.240 | 33.400 | 37.500 |
| Flexometer °C. | 108 | 107 | 103 | 103 | 102 |
| Durometer at 22° C. | 64 | 64 | 63 | 63 | 61 |
| Ring tear at 100° C. | 209 | 166 | 148 | 181 | 171 |
| Rebound at 25° C. | 44 | 45 | 48 | 48 | 50 |
| Rebound at 100° C. | 65 | 67 | 68 | 70 | 68 |

a) Dynamic mechanical testing conducted on MTS apparatus

The tests in Table II indicate that the method of the present invention reduces hysteresis, as compared to Example 1 mixed conventionally, and also that it provides a greater dispersion of carbon black. Dynamic mechanical testing, conducted on MTS apparatus showed Tan $\delta$ values decreasing as the ratio of carbon black to rubber in the masterbatch increased. The test was run at 37.8° C., 3.94 Kg of preload and 10Hz and measures hysteresis. Hysteresis loss from Example 1 (control) to Example 5 equalled about 24 percent. Resistivity is an indication of the degree of dispersion of the carbon black in the total rubber stock, with greater resistance demonstrating finer dispersion. The dispersion quickly doubled and eventually increased by more than an order of magnitude.

As hysteresis is reduced, flexometer heating of the stock will decrease which was also evident as the amount of carbon black in the stocks was increased. Similarly, durometer values improved indicating lower hysteresis. Ring tear also decreased, indicating a lowering of hysteresis. And finally, rebound values, measured by dropping a steel ball from a fixed distance onto a plug of each stock, increased as the carbon black increased in the masterbatch, indicating a more resilient stock, consistent with reduced hysteresis.

Separate testing, not reported herein, established that the work input to mix the stocks was the same for Examples 1 through 5 and that processability was essentially unchanged.

The foregoing tests established that the method of the present invention was capable of reducing hysteresis in cured rubber stocks and improving the rolling resistance of tread stocks manufactured therefrom, and therefore, the effect of the method on a property such as skid resistance was next determined. This was done by the use of a Stanley-London skid resistance tester. A stock similar to the one reported hereinabove comprising 65 parts of carbon black per 137.5 oil extended rubber was employed in six separate tests, Examples 7 to 12. Example No. 7 was a control
wherein all the rubber and carbon black were combined
without a separate step of masterbatching. Examples 8 to
12 contained from 52.5 to 82.5 phor of carbon black in 7.5
part increments. The amount of carbon black in each
masterbatch is more specifically set forth in Table III
with the Stanley-London test values and, for comparison,
Tan δ.

TABLE III

Physical Properties of Examples 7-12

| Example No. | 7 | 8 | 9 | 10 | 11 | 12 |
|---|---|---|---|---|---|---|
| SBR[a] | 137.5 | 123.8 | 108.3 | 96.2 | 86.6 | 78.8 |
| HAF black | 65 | 65 | 65 | 65 | 65 | 65 |
| Black in masterbatch phor | 47.3 | 52.5 | 60.0 | 67.5 | 75.0 | 82.5 |
| SBR added to masterbatch | 0 | 13.7 | 29.2 | 41.3 | 50.9 | 58.7 |
| Tan $\delta$ | .166 | .145 | .143 | .129 | .122 | .111 |
| Stanley-London | 74 | 77 | 77.5 | 78 | 80 | 78 |

a) Rubber composition = 100 parts of solution SBR + 37.5 parts of aromatic processing oil or 137.5 parts total

It can be noted from Table III that hysteresis was reduced as much as 33 percent (Example No. 12) by masterbatching. The Stanley-London skid resistance test provides higher numbers as friction between a rubber block and a fixed surface increases and what was observed was that the friction between the surfaces was increased by masterbatching. This is contrary to what would normally be expected because reducing hysteresis should produce a stock providing lower rolling resistance with an attendant decrease in traction or skid resistance. Examples 8 to 12 clearly show greater frictional engagement, equating with improved skid resistance, where hysteresis has been reduced.

In conclusion, reduced hysteresis and greater dispersion of the carbon black resulting from practice of the present invention imparts improved rolling resistance to rubber compounds employed in tread stocks while unexpectedly, skid resistance is also improved. The present invention need not be limited in application to tread stocks, however, as reduced hysteresis is beneficial in many other components of a tire such as skim stocks for belts and body plies, sidewalls, stabilizer ply inserts and the like. Moreover, reduced hysteresis stocks would have utility in a variety of other rubber articles, both reinforced and non-reinforced. Hysteresis reduction of up to about 33 percent has been demonstrated in Table III and reductions of even greater amounts may be possible.

Based upon the reduction of hysteresis reported in Tables II and III, it should be apparent that the objects of the invention have been met. It is to be understood that the synthetic rubber compounds disclosed herein as well as the method for reducing hysteresis therein can be practiced by employing other SBR's with and without 1,4-polybutadiene other than the SBR rubber chosen to exemplify the foregoing work. It should also be apparent to those skilled in the art that the present method and synthetic rubber compounds can contain a variety of different known components including oil to effect desired properties as well as processing of the rubber without detracting from the results desired and obtained herein. Similarly, the present invention is not limited to any specific carbon black other than those which would customarily be added to rubber compounds.

In conclusion, it is to be understood that all methods and rubber compounds disclosed herein fall within the scope of the claimed invention and that the subject invention is not to be limited by the examples set forth herein. These have been provided merely to demonstrate operability and, therefore, the selection of specific components and mixing times or temperatures can be determined without departing from the spirit of the invention herein disclosed and described. Moreover, the scope of the invention shall include all modifications and variations that may fall within the scope of the attached claims.

## CLAIMS

1. A method for reducing hysteresis in synthetic rubber stocks containing carbon black including the steps of:

mechanically compounding carbon black with a rubber selected from the group consisting of emulsion and solution styrene butadiene rubber and blends of each with and without 1,4 polybutadiene rubber to form a masterbatch containing less than 100 parts of rubber;

adding additional parts of said rubber to said masterbatch sufficient to bring the total parts of rubber to 100 and to reduce the carbon black content therein to an amount less than the level present in said masterbatch; and

mechanically compounding said additional parts of rubber with said masterbatch to form a rubber compound.

2. A method for preparing tread stocks having improved rolling resistance and skid resistance comprising the steps of:

mechanically compounding carbon black with a rubber selected from the group consisting of emulsion and solution styrene butadiene rubber and blends of each with and without 1,4 polybutadiene rubber to form a masterbatch containing less than 100 parts of rubber;

adding additional parts of said rubber to said masterbatch sufficient to bring the total parts of rubber to 100 and to reduce the carbon black content therein to an amount less than the level present in said masterbatch;

mechanically compounding said additional parts of rubber with said masterbatch to form a rubber compound; and

forming a treadstock therewith.

3. A method, as set forth in claims 1 or 2, wherein said synthetic rubber comprises solution styrene butadiene rubber.

4. A method, as set forth in claim 3, wherein said rubber is oil extended styrene butadiene rubber.

5. A method, as set forth in claim 4, wherein said rubber contains about 37.5 parts of oil and the total parts of oil extended rubber is 137.5.

6. A method, as set forth in claim 5, wherein said masterbatch contains from about 50 to 85 parts of carbon black per 100 parts of oil extended rubber and the amount of carbon black present after said second step of mechanically compounding equals 65 parts per 100 parts of rubber.

7. A method, as set forth in claim 6, wherein said masterbatch contains about 50 to 55 parts of carbon black per 100 parts of oil extended rubber and hysteresis is reduced by about 4 to 13 percent.

8. A method, as set forth in claim 6, wherein said masterbatch contains about 56 to 65 parts of carbon black per 100 parts of oil extended rubber and hysteresis is reduced by about 14 to 20 percent.

9. A method, as set forth in claim 6, wherein said masterbatch contains from about 66 to 75 parts of carbon black per 100 parts of oil extended rubber and hysteresis is reduced by about 22 to 26 percent.

10. A method, as set forth in claim 6, wherein said masterbatch contains from about 76 to 85 parts of carbon black per 100 parts of oil extended rubber and hysteresis is reduced by about 22 to 33 percent.

11. A method, as set forth in claims 1 or 2, wherein said first step of mechanically compounding is conducted for a period of time of from about 1.5 to 3 minutes.

12. An improved tire having a tread stock possessing reduced rolling resistance and improved skid resistance, the improvement wherein said tread stock is prepared by the steps of:

mechanically compounding carbon black with a rubber selected from the group consisting of emulsion and solution styrene butadiene rubber and blends of each with and without 1,4 polybutadiene rubber to form a masterbatch containing less than 100 parts of rubber;

adding additional parts of said rubber to said masterbatch sufficient to bring the total parts of rubber to 100 and to reduce the carbon black content therein to an amount less than the level present in said masterbatch; and

mechanically compounding said additional parts of rubber with said masterbatch to form a rubber compound from which the tread stock is prepared.

13. An improved tire, as set forth in claim 12, wherein said synthetic rubber comprises solution styrene butadiene rubber.

14. An improved tire, as set forth in claim 13, wherein said rubber is oil extended styrene butadiene rubber.

15. An improved tire, as set forth in claim 14, wherein said rubber contains about 37.5 parts of oil and the total parts of oil extended rubber is 137.5.

16. An improved tire, as set forth in claim 15, wherein said masterbatch contains from about 50 to 85 parts of carbon black per 100 parts of oil extended rubber and the amount of carbon black present after said second step of mechanically compounding equals 65 parts per 100 parts of rubber.

17. An improved tire, as set forth in claim 16, wherein said masterbatch contains about 50 to 55 parts of carbon black per 100 parts of oil extended rubber and hysteresis is reduced by about 4 to 13 percent.

18. An improved tire, as set forth in claim 16, wherein said masterbatch contains about 56 to 65 parts of carbon black per 100 parts of oil extended rubber and hysteresis is reduced by about 15 to 20 percent.

19. An improved tire, as set forth in claim 16, wherein said masterbatch contains from about 66 to 75 parts of carbon black per 100 parts of oil extended rubber and hysteresis is reduced by about 22 to 26 percent.

20. An improved tire, as set forth in claim 16, wherein said masterbatch contains from about 76 to 85 parts of carbon black per 100 parts of oil extended rubber and hysteresis is reduced by about 22 to 33 percent.

21. An improved tire, as set forth in claim 12, wherein said first step of mechanically compounding is conducted for a period of time of from about 1.5 to 3 minutes.

0105239

Application number

EP 83 10 9078

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 051 450 (POLYSAR) <br> * Claims 1,5; page 2, line 14; examples 1,4; page 7, lines 13-26 * | 1-21 | C 08 J 3/20 <br> C 08 L 9/06 <br> C 08 B 60C |
| A | US-A-2 623 024 (B.C. BARTON) <br><br> * Claim 1 * | | |
| A | US-A-3 294 720 (A.J. BEBER et al.) <br> * Claim 1 * | | |
| A | FR-A-1 381 915 (PIRELLI) <br><br> * Abstract * | | |

| | |
|---|---|
| | TECHNICAL FIELDS SEARCHED (Int. Cl. 3) |
| | C 08 J <br> C 08 L <br> B 60 C |

The present search report has been drawn up for all claims

| Place of search | Date of completion of the search | Examiner |
|---|---|---|
| THE HAGUE | 20-12-1983 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82